# FASCICULE DE BREVET EUROPEEN

(11) **EP 4 570 139 B1**
(45) Date de publication et mention de la délivrance du brevet: **30.09.2026**
(21) Numéro de dépôt: 24218601.3
(22) Date de dépôt: 10.12.2024
(51) Int. Cl.: A47J 27/08, A47J 36/10, A47J 37/06

(54) **APPAREIL ÉLECTRIQUE DE PRÉPARATION CULINAIRE**
ELEKTRISCHES LEBENSMITTELZUBEREITUNGSGERÄT
ELECTRIC FOOD PREPARATION APPLIANCE

(30) Priorité: 11.12.2023 FR 2313949
(43) Date de publication de la demande: 18.06.2025
(73) Titulaire: SEB S.A., 69130 Ecully (FR)
(72) Inventeur: TURPIN, Romain, 69134 ECULLY CEDEX (FR); DUMOUX, Philippe, 69134 ECULLY CEDEX (FR)
(74) Mandataire: SEB Développement

(56) Documents cités:
- CN-A- 101 779 918
- CN-A- 106 235 878
- CN-B- 103 271 625
- US-B2- 8 944 273

## Description

### Domaine technique de l'invention

La présente invention concerne de manière générale un appareil électrique de préparation culinaire pouvant conduire plusieurs modes de cuisson, dont au moins un mode de cuisson sous pression et au moins un mode de cuisson à air chaud.

### État de la technique

Il est connu dans l'art antérieur des appareils électriques de préparation culinaire des appareils pouvant conduire plusieurs modes de cuisson. Les différents modes peuvent être choisis par un utilisateur sur une interface homme-machine située sur le boîtier et le verrouillage du couvercle s'effectue par la bascule d'un sélecteur frontal autour d'un axe vertical entre trois positions. En contrepartie, le sélecteur est nécessairement déplacé par les doigts seuls de l'utilisateur qui ne peuvent transmettre que des efforts limités, particulièrement lorsque le sélecteur est basculé autour d'un axe vertical. De plus, dans un environnement où l'utilisateur est susceptible de manipuler des substances grasses, un sélecteur frontal peut présenter des difficultés de préhension. Ainsi, il peut exister des situations où le choix d'un sélecteur frontal comme interface de commande d'un appareil de préparation culinaire nécessite une utilisation des deux mains de l'utilisateur, l'appareil de cuisson présentant ici une ergonomie restreinte.

Le document CN106235878A divulgue un ustensile de cuisson agencé pour conduire un mode de cuisson sous pression.

En outre ce document divulgue :
- une cuve, définissant un espace de travail destiné à recevoir des aliments pour la réalisation de la préparation culinaire,
- un couvercle, mobile entre une position de fermeture dans laquelle un accès vers l'espace de travail est interdit et une position d'ouverture dans laquelle l'accès vers l'espace de travail est autorisé,
- des moyens de verrouillage du couvercle, mobiles entre une position de déverrouillage dans laquelle le couvercle peut être librement déplacé entre la position de fermeture et la position d'ouverture, et une position de verrouillage dans laquelle le couvercle est verrouillé dans la position de fermeture de sorte à autoriser le mode de cuisson sous pression,
- une interface de commande, mobile entre une première position de commande dans laquelle les moyens de verrouillage sont dans leur position de verrouillage et une deuxième position de commande dans laquelle les moyens de verrouillage sont dans leur position de déverrouillage, l'interface de commande se présentant sous la forme d'une poignée rotative autour d'un axe de poignée contenu dans un plan sensiblement parallèle au plan de base.

Ce type de poignée rotative est avantageux pour faciliter l'ouverture et la fermeture du couvercle. Cependant, cet ustensile de cuisson ne propose qu'un mode de cuisson sous pression alors que d'autres modes de cuisson peuvent intéresser un utilisateur.

Le document CN206119969U divulgue un appareil de cuisson agencé pour conduire une pluralité de modes de cuisson dont au moins un mode de cuisson sous pression et pour conduire au moins un mode de cuisson à air chaud. En outre ce document divulgue :
- un boîtier avec une portion d'appui agencée pour reposer sur un plan de travail et définissant un plan de base,
- un logement, ménagé dans le boîtier,
- une cuve, définissant un espace de travail destiné à recevoir des aliments pour la réalisation de la préparation culinaire, et agencée pour être reçue dans le logement du boîtier,
- un couvercle, mobile entre une position de fermeture dans laquelle un accès vers l'espace de travail est interdit et une position d'ouverture dans laquelle l'accès vers l'espace de travail est autorisé,
- des moyens de verrouillage du couvercle, mobiles entre une position de déverrouillage dans laquelle le couvercle peut être librement déplacé entre la position de fermeture et la position d'ouverture, et une position de verrouillage dans laquelle le couvercle est verrouillé dans la position de fermeture de sorte à autoriser ledit au moins un mode de cuisson sous pression,
- une interface de commande, mobile entre une première position de commande dans laquelle les moyens de verrouillage sont dans leur position de verrouillage et une deuxième position de commande dans laquelle les moyens de verrouillage sont dans leur position de déverrouillage.

Cependant, l'appareil de cuisson décrit dans ce document propose une solution avec un couvercle dédié au mode de cuisson sous pression et un autre couvercle dédié au mode de cuisson à air chaud et dans laquelle le couvercle pour le mode de cuisson sous pression présente une interface de commande du type bouton rotatif présentant un axe de rotation sensiblement vertical.

### Exposé de l'invention

Un but de la présente invention est de répondre aux inconvénients de l'art antérieur mentionnés ci-dessus et en particulier, de proposer un appareil électrique de préparation culinaire proposant un mode de cuisson sous pression et un mode de cuisson à air chaud et comprenant un couvercle utilisé à la fois pour le mode de cuisson sous pression et le mode de cuisson à air chaud présentant une interface de commande comprenant une poignée rotative autour d'un axe horizontal.

Pour cela, un premier aspect de l'invention concerne un appareil électrique de préparation culinaire selon la revendication 1. La poignée rotative concerne ici toute partie d'objet conçue pour être saisie et tenue par la main fermée, particulièrement la partie d'un instrument ou d'un outil permettant de le tenir et/ou de le porter. Selon la mise en œuvre ci-dessus, la poignée rotative présente une grande surface de contact avec la main de l'utilisateur transmettant le couple nécessaire au verrouillage, soit une facilité de saisie et de mouvement. Un mouvement de rotation autour d'un tel axe de poignée s'avère être particulièrement ergonomique et intuitif. La poignée rotative peut être un levier.

L'au moins un mode de cuisson à air chaud permet une grande diversité de cuissons et une grande diversité d'aliments pouvant être cuits par le même appareil. On peut prévoir que l'appareil électrique de préparation culinaire comprenne une interface homme-machine, préférentiellement sous la forme de boutons agencés pour être pressés, d'une molette ou d'un écran tactile, pour recevoir le mode de cuisson choisi par l'utilisateur. On peut prévoir de relier l'interface homme-machine à une unité de commande agencée pour commander un processeur ou un microprocesseur afin de diriger le fonctionnement des actionneurs de cuisson choisie par l'utilisateur.

L'appareil de cuisson peut en outre présenter une ou plusieurs des caractéristiques suivantes, prises seules ou en combinaison.

Selon un mode de réalisation, l'appareil électrique de préparation culinaire est agencé pour autoriser le mode de cuisson à air chaud indépendamment de la position des moyens de verrouillage. Ainsi, il existe un aspect uniquement fonctionnel de l'appareil qui autoriserait le mode de cuisson à air chaud quelle que soit la position des moyens de verrouillage, à la condition que le couvercle repose sur le boîtier, mais il serait également envisageable de prévoir une sécurité supplémentaire qui interdirait tout mode de cuisson lorsque les moyens de verrouillage ne sont pas dans une position de verrouillage.

Selon un mode de réalisation, la cuve est amovible par rapport au boîtier.

Selon un mode de réalisation, l'appareil comprend des moyens de chauffage internes et/ou intégrés, typiquement des moyens de chauffage intégrés dans le boîtier et/ou dans le couvercle, pour former un appareil de cuisson « nomade » ou « transportable » à raccorder à un réseau électrique. Il n'y a pas besoin de moyens de chauffage externes (table de cuisson, plaque de cuisson, cuisinière, gazinière).

Selon un mode de réalisation, le couvercle comprend des moyens de cuisson comprenant des moyens de chauffage et/ou des moyens de ventilation de cuisson. Le rassemblement des moyens de cuisson dans le couvercle permet de prévoir plus de place dans le boîtier pour l'espace de travail. Couplés au moins en partie avec les moyens de ventilation de cuisson, les moyens de chauffage permettent de conduire une cuisson par convection. Les moyens de chauffage peuvent être au moins une résistance électrique. Les moyens de chauffage peuvent être prévus dans le couvercle et/ou sous la cuve et particulièrement dans le boîtier. Ainsi, dans un mode de cuisson à air chaud, les moyens de chauffage sont répartis autour des aliments à cuire et les aliments à cuire cuisent plus vite et de manière plus homogène. Selon un mode de réalisation, les moyens de chauffage comprennent des moyens de chauffage d'air (par exemple une résistance électrique agencée dans un passage exposé ou traversé par un flux d'air quand les moyens de ventilation de cuisson fonctionnent). Selon un mode de réalisation, les moyens de chauffage comprennent des moyens de chauffage de cuve (par exemple une résistance électrique agencée sous la cuve et/ou à proximité d'une paroi inférieure de la cuve). Selon un mode de réalisation, les moyens de chauffage d'air sont distincts et/ou indépendamment commandables des moyens de chauffage de cuve. Selon un mode de réalisation, les moyens de chauffage d'air sont prévus pour être utilisés lors du mode de cuisson par convection. Selon un mode de réalisation, les moyens de chauffage de cuve sont prévus pour être utilisés lors du mode de cuisson sous pression.

Selon un mode de réalisation, l'appareil comprend des moyens de connexion ou d'alimentation électrique. On peut prévoir une prise, une fiche, un câble électrique pour connecter les moyens de chauffage à une source de courant.

Selon un mode de réalisation, l'interface de commande est agencée sur le couvercle. L'interface de commande est ainsi facilement accessible.

Selon un mode de réalisation, les moyens de verrouillage forment un système de verrouillage à baïonnettes. Cet assemblage repose sur la mise en œuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues par repliement et découpe du bord supérieur libre de la cuve. Ce système présente notamment un faible poids, une fiabilité et une simplicité d'utilisation.

Selon un mode de réalisation, les moyens de verrouillage comprennent une couronne de verrouillage, pourvue de dents, agencée dans l'un du couvercle ou du boîtier pour s'assembler avec les contreformes de l'autre du couvercle ou du boîtier. Les contreformes du boîtier peuvent également être situées sur la cuve.

Selon un mode de réalisation, les moyens de verrouillage comprennent des mâchoires rétractables.

Selon un mode de réalisation, le couvercle comprend les moyens de verrouillage.

Selon un mode de réalisation, la poignée rotative est mobile entre :
- une position rabattue contre le couvercle, et
- une position relevée par rapport au couvercle. En d'autres termes, la position rabattue de la poignée rotative correspond à une première position de commande de l'interface de commande, et une position relevée de la poignée rotative correspond à une deuxième position de l'interface de commande.

Selon un mode de réalisation, la position rabattue de la poignée rotative est agencée pour définir la position de verrouillage des moyens de verrouillage et la position relevée de la poignée rotative est agencée pour définir la position de déverrouillage des moyens de verrouillage.

Selon un mode de réalisation, les moyens de verrouillage comprennent un dispositif de transformation agencé pour transformer un mouvement de rotation de la poignée rotative en un mouvement de translation, et de préférence pour transformer le mouvement de translation en un second mouvement de rotation des moyens de verrouillage.

Selon un mode de réalisation, les moyens de verrouillage comprennent au moins un pignon s'engrenant avec une crémaillère. Le pignon est entraîné par le mouvement de rotation de la poignée rotative.

Selon un mode de réalisation, la poignée rotative et/ou la crémaillère sont agencées en périphérie du couvercle.

Selon un mode de réalisation, les moyens de verrouillage comprennent au moins une bielle et/ou un parallélogramme déformable.

Selon un mode de réalisation, les moyens de verrouillage comprennent au moins un chariot agencé pour être déplacé par la poignée rotative et relié à la couronne de verrouillage, permettant au dispositif de transformation de passer d'une rotation autour d'un premier axe à une rotation de la couronne de verrouillage selon un autre axe.

Selon un mode de réalisation, les moyens de verrouillage comprennent une liaison glissière entre le chariot et la couronne, formée par exemple par un index entraîneur (ou un doigt) embarqué sur l'un du chariot et de la couronne de verrouillage, et une fente (ou une rainure ou une forme femelle) ménagée sur l'autre du chariot et de la couronne de verrouillage.

Selon un mode de réalisation, le chariot est agencé en liaison glissière sur le couvercle.

Selon un mode de réalisation, le mouvement de rotation de la poignée rotative entraîne un premier pignon agencé pour former une portion de couronne et constituer un engrènement intermédiaire. La rotation du premier pignon entraîne la rotation d'un second pignon, de plan de rotation et éventuellement de diamètre primitif différent de celui du premier pignon. Le second pignon s'engrène à la crémaillère.

Selon un mode de réalisation, l'appareil de préparation culinaire comprend un couvercle interne amovible agencé pour former des moyens d'étanchéité pour permettre le mode de cuisson sous pression. En effet, la présente invention nécessite seulement l'ajout au dispositif initial d'un accessoire supplémentaire tel que ce couvercle interne pour pouvoir conduire un mode de cuisson sous pression, limitant ainsi la place que requière le stockage d'un tel appareil. Le couvercle interne est conçu pour être emboîté dans un logement du couvercle particulièrement aménagé pour le recevoir, assemblé au couvercle préférentiellement par des gâchettes coulissantes agencées pour coopérer avec des contreformes du couvercle. Les gâchettes peuvent alternativement être remplacées par des crochets, ou des pattes élastiques, ou des pattes flexibles, ou des pattes articulées.

Selon un mode de réalisation, les moyens de verrouillage comprennent des moyens de maintien agencés pour maintenir le couvercle contre le boîtier. Une opération de verrouillage du couvercle au boîtier lorsque le couvercle est dans sa position de fermeture demande d'exercer :
- une force de direction sensiblement normale au plan de base sur l'un du couvercle et du boîtier vers l'autre du couvercle et du boîtier,
- un couple autour d'un axe de direction sensiblement normale au plan de base pour déplacer les dents de la couronne de verrouillage en regard des contreformes de la cuve ou du boîtier. Le maintien du couvercle contre le boîtier effectué par les moyens de maintien limite les frottements entre les dents de la couronne de verrouillage et les contreformes du boîtier ou de la cuve. Les moyens de maintien peuvent prendre la forme d'au moins un loquet, et/ou au moins un verrou et/ou au moins une bascule.

Selon un mode de réalisation, les moyens de maintien sont mobiles entre une position de maintien dans laquelle le couvercle est maintenu contre le boîtier dans la position de fermeture, et une position d'accès, dans laquelle le couvercle peut être déplacé de la position de fermeture vers la position d'ouverture,
l'interface de commande étant mobile vers une troisième position de commande dans laquelle les moyens de maintien sont dans la position d'accès,
et la deuxième position de commande est agencée entre la troisième position de commande et la première position de commande.
En d'autres termes, lorsque l'interface de commande est agencée dans la troisième position, le couvercle est agencé dans la position d'ouverture, et les moyens de maintien sont agencés dans la position d'accès. Lorsque l'interface de commande est agencée dans la deuxième position, le couvercle est agencé dans la position de fermeture, et les moyens de maintien sont agencés dans la position de maintien.
La rotation de la poignée rotative autour d'un axe parallèle au plan de base de boîtier suit un mouvement naturel et intuitif de l'utilisateur, qui ouvre l'espace de travail et place le couvercle en position d'ouverture en levant la poignée rotative, rappelant le mouvement effectué pour soulever le couvercle amovible d'un autre récipient quelconque de cuisson, et qui ferme l'espace de travail en abaissant la poignée rotative.

En soulevant la poignée, l'utilisateur déverrouille les moyens de verrouillage, libère les moyens de maintien et peut placer ou déployer le couvercle dans la position d'ouverture (une position déployée) où l'espace de travail est ouvert (libre d'accès) en utilisant la même pièce et en accomplissant un geste similaire, ce qui assure à l'utilisateur une rapidité d'exécution et une simplicité de prise en main de l'appareil électrique de préparation culinaire.
Finalement, la séparation de l'opération de verrouillage des moyens de verrouillage en deux séquences distinctes (maintien du couvercle en position de fermeture avec pré-compression par exemple du joint d'étanchéité, puis actionnement des moyens de verrouillage à proprement parler selon les positions de l'interface de commande) permet de limiter l'effort total à produire d'un même mouvement par l'utilisateur. En maintenant préalablement serrées les dents de la couronne de verrouillage au boîtier, les dents se positionnent par la suite plus facilement par rapport aux contreformes lors du verrouillage, et l'opération de verrouillage nécessite de l'utilisateur moins d'efforts à exercer sur l'interface de commande.

Selon un mode de réalisation, les moyens de verrouillage comprennent des moyens de déplacement pour forcer un déplacement des moyens de maintien vers la position d'accès. Ils peuvent être une came ou un levier ou une bielle.

Selon un mode de réalisation, les moyens de maintien sont formés par au moins un loquet.

Selon un mode de réalisation, les moyens de verrouillage sont commandés par plusieurs interfaces de commande.

Selon un mode de réalisation, l'axe de poignée est parallèle à un axe de rotation de couvercle définissant des mouvements du couvercle entre la position d'ouverture du couvercle et la position de fermeture du couvercle. Selon un mode de réalisation, le couvercle est attaché ou relié au boîtier selon une liaison pivot. Plus particulièrement, l'axe de rotation de couvercle est l'axe de rotation d'une liaison pivot entre le boîtier et le couvercle, permettant au couvercle de passer de la position de fermeture à la position d'ouverture du couvercle et inversement.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue générale d'un appareil électrique de préparation culinaire selon la présente invention comprenant des moyens de verrouillage dans une position de verrouillage ;
[fig. 2] représente une vue générale d'un appareil électrique de préparation culinaire selon la présente invention dont les moyens de verrouillage dans une position de déverrouillage ;
[fig. 3] représente une vue du couvercle de l'appareil électrique de préparation culinaire dont les moyens de verrouillage sont dans une position verrouillée ;
[fig. 4] représente une vue du couvercle de l'appareil électrique de préparation culinaire dont les moyens de verrouillage sont dans une position déverrouillée ;
[fig. 5] représente une vue du mécanisme de verrouillage des moyens de verrouillage du couvercle à un boîtier dans une position de déverrouillage;
[fig. 6] représente un détail du mécanisme des moyens de verrouillage dans une position de déverrouillage;
[fig. 7] représente une vue partielle de l'appareil de préparation culinaire avec des moyens de verrouillage alternatifs ;
[fig. 8] représente une vue partielle de l'appareil de préparation culinaire avec des moyens de verrouillage alternatifs dans une position déverrouillée et verrouillés ;

### Description détaillée de mode(s) de réalisation

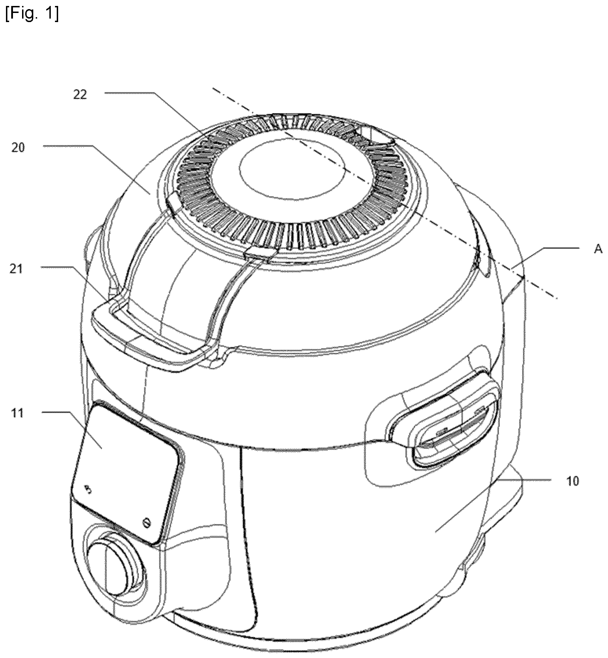

La figure 1 représente un appareil électrique de préparation culinaire selon la présente invention, comprenant un boîtier 10 prévu pour recevoir dans un logement interne une cuve, par exemple amovible, dans laquelle sont déposés les aliments à cuire, et former un espace de travail. Un couvercle 20 est agencé sur le boîtier 10 afin d'interdire l'accès à ou fermer l'espace de travail lorsque le couvercle 20 est dans une position de fermeture (comme représentée figure 1). Le couvercle 20 comprend une interface de commande présentant une poignée rotative 21 prévue pour être levée ou rabattue par un utilisateur afin de commander une position de fermeture, ou d'ouverture du couvercle 20. Le couvercle 20 est prévu pour être relié au boîtier 10 par une liaison pivot d'axe de rotation de couvercle A parallèle à une surface de fond de boîtier 10. La figure 1 montre également une interface homme-machine 11 appartenant au boîtier 10, sur laquelle l'utilisateur peut choisir un mode de cuisson, tel qu'un mode de cuisson par convection ou un mode de cuisson sous pression. Des moyens de chauffage sont prévus dans le couvercle 20 et/ou sous la cuve pour chauffer efficacement l'air de l'espace de travail durant un mode de cuisson par convection (c'est-à-dire un mode de cuisson à air chaud). Les moyens de chauffage peuvent être des résistances agencées pour produire de la chaleur avec un passage d'un courant électrique. Le couvercle 20 comprend des moyens de ventilation 22 prévus pour aérer et évacuer les flux d'air chaud et/ou de vapeur de la cuve issus de la cuisson des aliments durant une cuisson vapeur ou par convection.

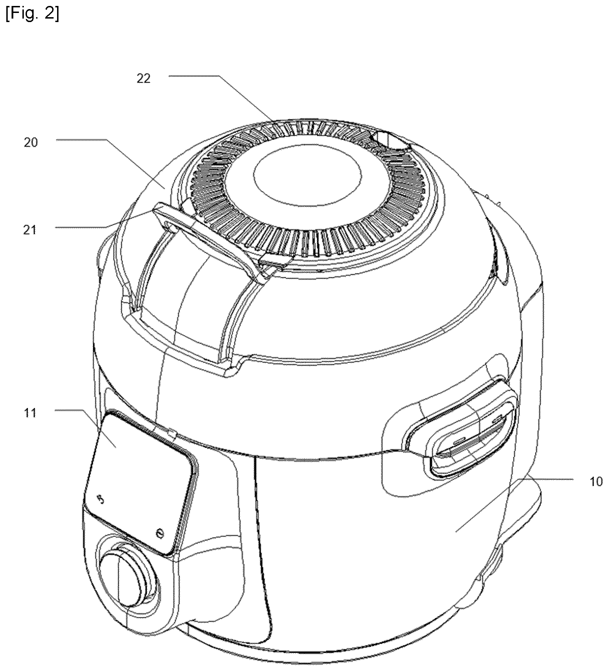

La figure 2 représente le même appareil de préparation culinaire, dont le couvercle 20 est dans une position d'ouverture.

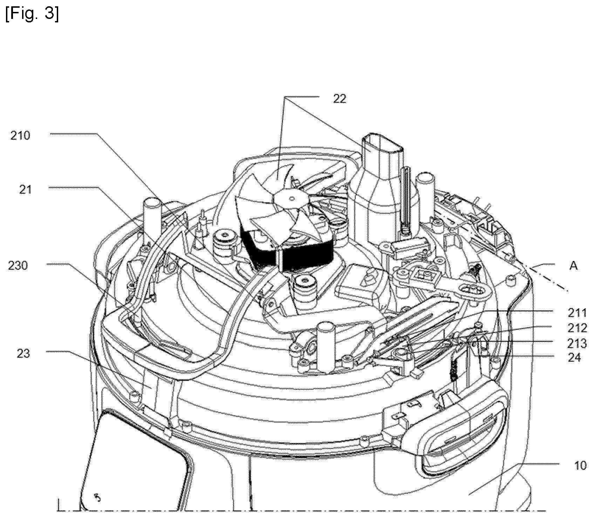

La figure 3 représente l'appareil de préparation culinaire sans capot de couvercle 20. Les moyens de ventilations 22 sont composés d'un ventilateur et d'un conduit de dégagement pour évacuer les flux de vapeur et d'air chaud. Des moyens de verrouillage sont dans une position de verrouillage. Ils comprennent une interface de commande positionnée dans une première position, relié sur chacun de ses côtés par une bielle 210 à une glissière 211, un chariot 212 solidaire de la glissière 211, et un index d'entraînement 213 embarqué sur une couronne de verrouillage (non représentée), permettant de tourner des dents de la couronne de verrouillage afin de les assembler à des contreformes de la cuve ou du boîtier 10. Le couvercle 20 comprend des moyens de maintien, eux-mêmes comprenant un loquet 23 et un index suiveur 230. L'index suiveur 230, tout comme l'index d'entraînement 213, est embarqué sur la couronne de verrouillage et suit une trajectoire circulaire autour de la périphérie du couvercle 20. Afin de permettre la position d'ouverture du couvercle 20, l'index suiveur 230 butte progressivement sur une rampe de came du loquet 23, et occasionne la rotation progressive d'une extrémité inférieure du loquet 23 vers l'intérieur du couvercle 20.
Une bascule 24 peut empêcher le rabattement de la poignée rotative 21 lorsque le couvercle 20 est dans la position d'ouverture, en particulier lorsque le couvercle est dans la position déployée.

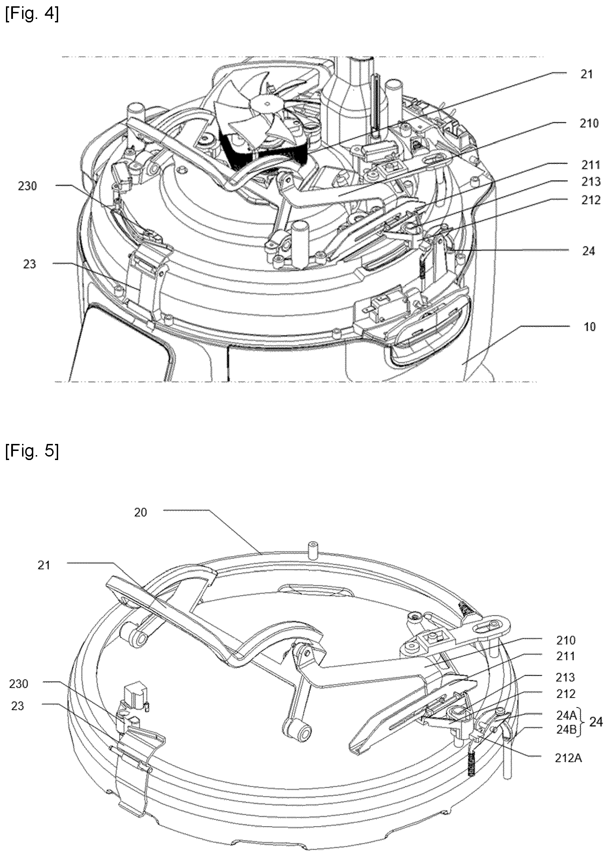

La figure 4 représente l'appareil de préparation culinaire sans capot de couvercle 20 dont les moyens de verrouillage sont dans une position de déverrouillage, et l'interface de commande est dans une troisième position. Dans cette position de l'interface de commande, le chariot 212 et la bielle 210 sont en fin de course dans leurs rainures respectives. L'index suiveur 230 est en fin de butée sur la piste de came du loquet 23 : le loquet 23 est dans une position d'accès autorisant le passage du couvercle 20 d'une position d'ouverture vers une position de fermeture et inversement.

La figure 5 montre une partie du couvercle 20 comprenant un cadre support destiné à être positionné sur la cuve ou le boîtier 10 et des moyens de verrouillage dans une position de déverrouillage. La poignée rotative 21 est agencée pour être manipulée selon un pivotement autour d'un axe de poignée, parallèle à la surface de fond de boîtier 10, de sorte à entraîner la bielle 210, contrainte de se déplacer selon la direction imposée par une glissière 211 à l'une de ses extrémités sous forme de tenon, dans une rainure de glissière 211. L'extrémité en tenon de la bielle 210 est jointe au chariot 212 percé d'un trou oblong, dans lequel se déplace l'index d'entraînement 213 embarqué sur la couronne de verrouillage située sous le couvercle 20. Le chariot 212 effectue un trajet rectiligne tandis que le trajet de l'index d'entraînement 213 décrit une courbe circulaire autour du couvercle 20. L'index suiveur 230 n'est pas en fin de course et les moyens de maintien sont dans une position de maintien. On pourrait envisager un mécanisme de changement de trajectoire inverse, en joignant à la bielle 210 l'index d'entraînement 213 qui coulisserait dans un trou oblong du chariot 212 embarqué sur la couronne de verrouillage. La couvercle 20 est dans une deuxième position.

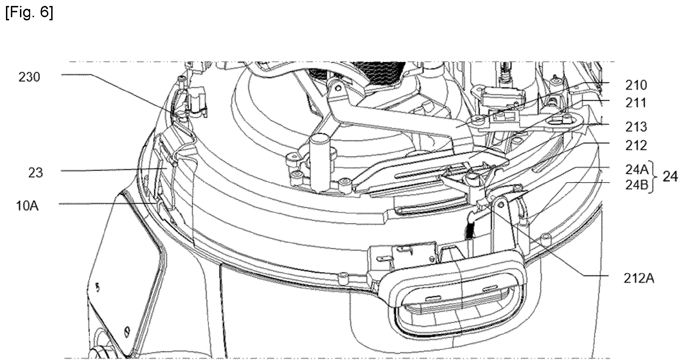

Le chariot 212 comprend une patte 212A agencée pour suivre le mouvement du chariot 212 et se caler dans un crochet de bascule 24 lorsqu'un plateau 24A de la bascule 24 est orienté suivant un plan sensiblement horizontal. La bascule 24 comprend un ressort qui place le plateau 24A dans un plan horizontal par défaut lorsque le couvercle 20 n'est pas en contact avec le boîtier 10. Ainsi, seule une translation ascendante d'une tige 24B de bascule 24 amenant le plateau 24A à basculer selon un plan suffisamment incliné par rapport au plan horizontal pour que la patte 212A de chariot puisse s'extraire du crochet de bascule 24 (visible figure 6) permet à l'utilisateur d'abaisser la poignée rotative 21. Cette translation ascendante s'effectue lorsque la base de la tige 24B entre en contact et appuie sur une surface supérieure du boîtier 10 : la course de la tige 24B, entre l'instant où la base de tige 24B entre en contact avec le boîtier 10 et l'instant où le cadre du couvercle 24 est en contact avec le boîtier 10, est suffisamment grande pour permettre un décrochage de la patte 212A de la bascule 24. Finalement, le rabattement de la poignée rotative 21 est empêché lorsque le couvercle 20 est dans la position d'ouverture, et que la base de la tige 24B n'est pas en contact avec le boîtier 10.

La figure 6 rend visible un crochet de boîtier 10A sur lequel s'appuie l'extrémité inférieure du loquet 23 lorsque l'index suiveur 230 n'est pas en contact avec la piste de came du loquet 23. En effet, des moyens de rappel (non représentés), poussent le loquet 23 vers le crochet de boîtier 10A en l'absence d'effort exercé sur le loquet 23.

Finalement, la séquence des opérations effectuées pour ouvrir le couvercle 20 depuis une position de fermeture du couvercle 20 est la suivante :
- l'utilisateur déplace l'interface de commande de la première position de commande vers la deuxième position de commande : le tenon de bielle 210 glisse d'une première course dans la glissière 211 ; la bague de verrouillage tourne autour du couvercle 20 sur une course en arc de cercle et se désolidarise du boîtier 10 ou de la cuve ; l'index suiveur 230 se déplace également d'une même course en arc de cercle jusqu'à arriver en regard de la piste de came de loquet 23. Le couvercle 20 est dans une position de fermeture lorsque l'interface de commande est dans la deuxième position de commande.
- l'utilisateur déplace l'interface de commande de la deuxième position de commande vers la troisième position de commande : la bielle 210 finit sa course dans la glissière 211 ; la patte 212A de chariot 212 se situe au-dessus du plateau 24A de bascule 24 après être passée au-dessus du crochet de bascule 24 durant le déplacement de la poignée rotative 21 ; l'index suiveur 230 a poursuivi sa course le long de la piste de came de loquet 23 qui s'est incliné vers l'intérieur du couvercle 20 sous la poussée de l'index suiveur 230, se détachant du crochet de boîtier 10A. Les moyens de verrouillage sont dans la position déverrouillée et les moyens de maintien sont dans la position d'accès. Le couvercle 20 (en contact avec le boîtier) peut aller dans la position d'ouverture lorsque l'interface de commande arrive dans la troisième position de commande.
- l'utilisateur ouvre librement le couvercle 20 en continuant de déplacer la poignée rotative 21 suivant le même axe de poignée, de sorte à placer le couvercle 20 dans la position d'ouverture et accéder à l'espace de travail. Lorsque le couvercle 20 a suffisamment pivoté autour de l'axe de rotation de couvercle A, et particulièrement lorsque la base de la tige 24B n'est plus en contact avec le boîtier 10, le ressort de bascule 24 se détend et le crochet de bascule 24 vient s'engager avec la patte 212A de chariot, de sorte à bloquer l'interface de commande dans une troisième position.

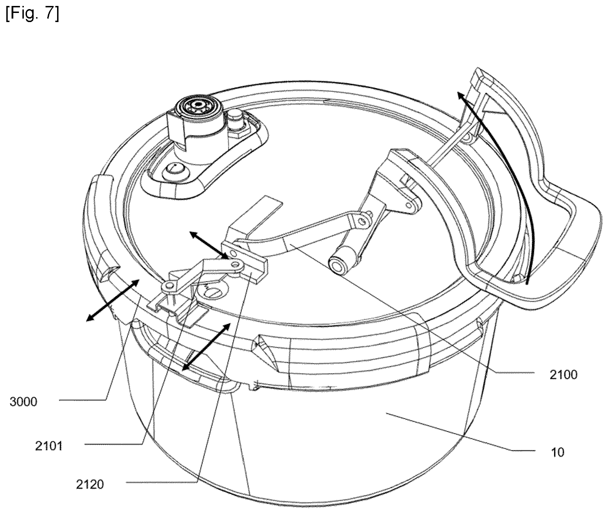

La figure 7 représente une interface de verrouillage selon la présente invention accouplée à des moyens de verrouillage alternatifs à mâchoires. La séquence de déverrouillage est dans ce mode de réalisation la suivante :
- L'utilisateur déplace l'interface de commande de la première position vers la deuxième position. L'interface de commande pivote alors autour d'un premier axe à l'une des extrémités d'une bielle 2100.
- Ce faisant, il pousse également une cornière 2120 monté en liaison pivot à l'autre des extrémités de la bielle 2100. La cornière 2120 comprend deux faces perpendiculaires l'une par rapport à l'autre et est elle-même articulée selon deux liaisons pivot sur chacune de ses faces, par la bielle 2100 d'une part et une autre bielle 2101 d'autre part. Les deux axes de pivot sont ainsi orthogonaux. La cornière 2120 se déplace suivant une translation indiquée par une double flèche pointant sur la cornière 2120.
- La bielle 2101 est liée en liaison pivot à une mâchoire 3000 de couvercle 20. La translation de la cornière 2120 la contraint à se déplacer suivant une translation d'axe perpendiculaire à l'axe de translation de la cornière 2120.
- La mâchoire 3000, qui joint dans la position de verrouillage des moyens de verrouillage le boîtier 10 au couvercle 20, s'écarte alors et rend possible un mouvement relatif du couvercle 20 par rapport au boîtier 10.

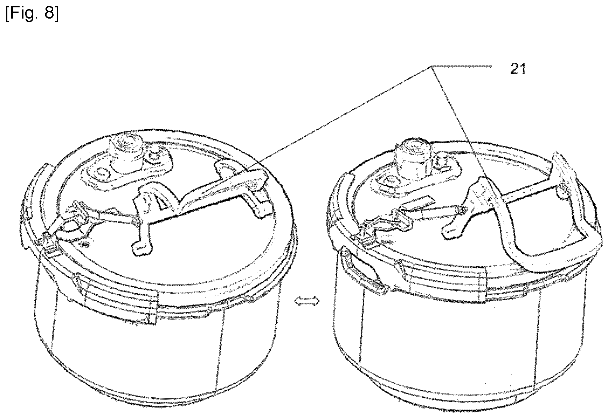

La figure 8 représente les moyens de verrouillage à mâchoires dans leur position de déverrouillage avec la poignée 21 en position relevée à gauche ; et les moyens de verrouillage à mâchoires dans la position de verrouillage à droite, avec la poignée 21 en position rabattue.

### Application industrielle

Un appareil de préparation culinaire selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut noter que les mécanismes de transmission d'efforts consistant à transformer une rotation selon un premier axe en une rotation selon un second axe différent, de la poignée rotative vers la bague de verrouillage ou les mâchoires de couvercle, peuvent varier.

En particulier, on peut noter que les moyens de chauffage peuvent être des résistances, mais on peut prévoir des éléments rayonnants, des foyers halogènes, des bobines d'induction. Les moyens de chauffage peuvent être scindés ou séparés ou répartis dans l'appareil : une partie logée dans le couvercle, une autre partie logée dans le boîtier. Les moyens de chauffage scindés ou séparés ou répartis dans l'appareil peuvent être dédiés : une partie logée dans le couvercle pour la cuisson par convection (sans pression), une autre partie logée dans le boîtier pour la cuisson en mode sous pression.

## Revendications

1. Appareil électrique de préparation culinaire agencé pour conduire une pluralité de modes de cuisson dont au moins un mode de cuisson sous pression et pour conduire au moins un mode de cuisson à air chaud, comprenant au moins :
- un boîtier (10) avec une portion d'appui agencée pour reposer sur un plan de travail et définissant un plan de base,
- un logement, ménagé dans le boîtier (10),
- une cuve, définissant un espace de travail destiné à recevoir des aliments pour la réalisation de la préparation culinaire, et agencée pour être reçue dans le logement du boîtier (10),
- un couvercle (20), mobile entre une position de fermeture dans laquelle un accès vers l'espace de travail est interdit et une position d'ouverture dans laquelle l'accès vers l'espace de travail est autorisé,
- des moyens de verrouillage du couvercle (20), mobiles entre une position de déverrouillage dans laquelle le couvercle (20) peut être librement déplacé entre la position de fermeture et la position d'ouverture, et une position de verrouillage dans laquelle le couvercle (20) est verrouillé dans la position de fermeture de sorte à autoriser ledit au moins un mode de cuisson sous pression,
- une interface de commande, mobile entre une première position de commande dans laquelle les moyens de verrouillage sont dans leur position de verrouillage et une deuxième position de commande dans laquelle les moyens de verrouillage sont dans leur position de déverrouillage,
l'interface de commande comportant une poignée rotative (21) autour d'un axe de poignée contenu dans un plan sensiblement parallèle au plan de base.

2. Appareil électrique de préparation culinaire selon la revendication 1, agencé pour autoriser le mode de cuisson à air chaud indépendamment de la position des moyens de verrouillage.

3. Appareil électrique de préparation culinaire selon l'une des revendications 1 à 2, dans lequel le couvercle (20) comprend des moyens de cuisson comprenant des moyens de chauffage et/ou des moyens de ventilation (22) de cuisson.

4. Appareil électrique de préparation culinaire selon l'une des revendications 1 à 3, dans lequel l'interface de commande est agencée sur le couvercle (20).

5. Appareil électrique de préparation culinaire selon l'une des revendications 1 à 4, dans lequel les moyens de verrouillage forment un système de verrouillage à baïonnettes.

6. Appareil électrique de préparation culinaire selon l'une des revendications 1 à 5, dans lequel les moyens de verrouillage comprennent une couronne de verrouillage.

7. Appareil électrique de préparation culinaire selon l'une des revendications 1 à 4, dans lequel les moyens de verrouillage comprennent des mâchoires rétractables.

8. Appareil électrique de préparation culinaire selon l'une des revendications 1 à 7, dans lequel le couvercle (20) comprend les moyens de verrouillage.

9. Appareil électrique de préparation culinaire selon l'une des revendications 1 à 8, dans lequel la poignée rotative (21) est mobile entre :
- une position rabattue contre le couvercle (20), et
- une position relevée par rapport au couvercle (20).

10. Appareil électrique de préparation culinaire selon la revendication 9, dans laquelle la position rabattue de la poignée rotative (21) est agencée pour définir la position de verrouillage des moyens de verrouillage et dans laquelle la position relevée de la poignée rotative (21) est agencée pour définir la position de déverrouillage des moyens de verrouillage.

11. Appareil électrique de préparation culinaire selon l'une des revendications 1 à 10, dans lequel les moyens verrouillage comprennent un dispositif de transformation agencé pour transformer un mouvement de rotation de la poignée rotative (21) en un mouvement de translation, et de préférence pour transformer le mouvement de translation en un second mouvement de rotation des moyens de verrouillage.

12. Appareil électrique de préparation culinaire selon l'une des revendications 1 à 11, dans lequel les moyens de verrouillage comprennent au moins un pignon s'engrenant avec une crémaillère.

13. Appareil électrique de préparation culinaire selon la revendication 12, dans lequel la poignée rotative (21) et/ou la crémaillère sont agencées en périphérie du couvercle (20).

14. Appareil électrique de préparation culinaire selon l'une des revendications 1 à 13, dans lequel les moyens de verrouillage comprennent au moins une bielle et/ou un parallélogramme déformable.

15. Appareil électrique de préparation culinaire selon la revendication 6 ou selon l'une des revendications 8 à 14 dans leur dépendance à la revendication 6, dans lequel les moyens de verrouillage comprennent au moins un chariot (212) agencé pour être déplacé par la poignée rotative (21) et relié à la couronne de verrouillage.

16. Appareil électrique de préparation culinaire selon la revendication 15, dans lequel les moyens de verrouillage comprennent une liaison glissière entre le chariot (212) et la couronne, formée par exemple par un index entraîneur (213) embarqué sur l'un du chariot (212) et de la couronne de verrouillage, et une fente ménagée sur l'autre du chariot (212) et de la couronne de verrouillage.

17. Appareil électrique de préparation culinaire selon l'une des revendications 15 à 16, dans lequel le chariot (212) est agencé en liaison glissière sur le couvercle (20).

18. Appareil électrique de préparation culinaire selon l'une des revendications 1 à 17, comprenant un couvercle interne amovible agencé pour former des moyens d'étanchéité pour permettre le mode de cuisson sous pression.

19. Appareil électrique de préparation culinaire selon l'une des revendications 1 à 18, dans lequel les moyens de verrouillage comprennent des moyens de maintien agencés pour maintenir le couvercle (20) contre le boîtier (10).

20. Appareil électrique de préparation culinaire selon la revendication 19, dans lequel les moyens de maintien sont mobiles entre une position de maintien dans laquelle le couvercle (20) est maintenu contre le boîtier (10), et une position d'accès, dans laquelle le couvercle (20) peut être librement déplacé entre la position de fermeture et la position d'ouverture, dans lequel l'interface de commande est mobile vers une troisième position de commande dans laquelle les moyens de maintien sont dans la position d'accès,
et dans lequel la deuxième position de commande est agencée entre la troisième position de commande et la première position de commande.

21. Appareil électrique de préparation culinaire selon l'une des revendications 19 à 20, dans lequel les moyens de verrouillage comprennent des moyens de déplacement pour forcer un déplacement des moyens de maintien.

22. Appareil électrique de préparation culinaire selon l'une des revendications 19 à 21, dans lequel les moyens de maintien sont formés par au moins un loquet (23).

## Patentansprüche

1. Elektrisches Gerät zur Zubereitung von Speisen, ausgelegt zum Durchführen einer Mehrzahl von Gararten, darunter mindestens eine Druckgarart, und zum Durchführen mindestens einer Heißluftgarart, umfassend mindestens:
• ein Gehäuse (10) mit einem Auflageabschnitt, der dazu ausgelegt ist, auf einer Arbeitsfläche aufzuliegen, und der eine Basisebene definiert,
• eine im Gehäuse (10) ausgebildete Aufnahme,
• einen Behälter, der einen Arbeitsraum definiert, der zur Aufnahme von Lebensmitteln zur Durchführung der Speisenzubereitung bestimmt ist, und der dazu ausgelegt ist, in die Aufnahme des Gehäuses (10) eingesetzt zu werden,
• einen Deckel (20), der zwischen einer Schließstellung, in der ein Zugang zum Arbeitsraum verhindert ist, und einer Öffnungsstellung, in der der Zugang zum Arbeitsraum freigegeben ist, beweglich ist,
• Verriegelungsmittel des Deckels (20), die zwischen einer Entriegelungsstellung, in der der Deckel (20) frei zwischen der Schließstellung und der Öffnungsstellung bewegt werden kann, und einer Verriegelungsstellung beweglich sind, in der der Deckel (20) in der Schließstellung verriegelt ist, um die genannte mindestens eine Druckgarart zu ermöglichen,
• eine Bedieneinrichtung, die zwischen einer ersten Bedienstellung, in der sich die Verriegelungsmittel in ihrer Verriegelungsstellung befinden, und einer zweiten Bedienstellung, in der sich die Verriegelungsmittel in ihrer Entriegelungsstellung befinden, beweglich ist,
wobei die Bedieneinrichtung einen Drehgriff (21) aufweist, der um eine Griffachse drehbar ist, die in einer Ebene liegt, die im Wesentlichen parallel zur Basisebene verläuft.

2. Elektrisches Gerät zur Zubereitung von Speisen nach Anspruch 1, ausgelegt zur Ermöglichung der Heißluftgarart unabhängig von der Stellung der Verriegelungsmittel.

3. Elektrisches Gerät zur Zubereitung von Speisen nach einem der Ansprüche 1 bis 2, wobei der Deckel (20) Garvorrichtungen umfasst, die Heizeinrichtungen und/oder Garbelüftungseinrichtungen (22) umfassen.

4. Elektrisches Gerät zur Zubereitung von Speisen nach einem der Ansprüche 1 bis 3, wobei die Bedieneinrichtung am Deckel (20) angeordnet ist.

5. Elektrisches Gerät zur Zubereitung von Speisen nach einem der Ansprüche 1 bis 4, wobei die Verriegelungsmittel ein Bajonett-Verriegelungssystem bilden.

6. Elektrisches Gerät zur Zubereitung von Speisen nach einem der Ansprüche 1 bis 5, wobei die Verriegelungsmittel einen Verriegelungsring umfassen.

7. Elektrisches Gerät zur Zubereitung von Speisen nach einem der Ansprüche 1 bis 4, wobei die Verriegelungsmittel einziehbare Klemmbacken umfassen.

8. Elektrisches Gerät zur Zubereitung von Speisen nach einem der Ansprüche 1 bis 7, wobei der Deckel (20) die Verriegelungsmittel umfasst.

9. Elektrisches Gerät zur Zubereitung von Speisen nach einem der Ansprüche 1 bis 8, wobei der Drehgriff (21) beweglich ist zwischen:
• einer an den Deckel (20) angeklappten Stellung, und
• einer gegenüber dem Deckel (20) angehobenen Stellung.

10. Elektrisches Gerät zur Zubereitung von Speisen nach Anspruch 9, wobei die angeklappte Stellung des Drehgriffs (21) dazu ausgelegt ist, die Verriegelungsstellung der Verriegelungsmittel zu definieren, und wobei die angehobene Stellung des Drehgriffs (21) dazu ausgelegt ist, die Entriegelungsstellung der Verriegelungsmittel zu definieren.

11. Elektrisches Gerät zur Zubereitung von Speisen nach einem der Ansprüche 1 bis 10, wobei die Verriegelungsmittel eine Umwandlungsvorrichtung umfassen, die dazu ausgelegt ist, eine Drehbewegung des Drehgriffs (21) in eine Translationsbewegung umzuwandeln, und vorzugsweise die Translationsbewegung in eine zweite Drehbewegung der Verriegelungsmittel umzuwandeln.

12. Elektrisches Gerät zur Zubereitung von Speisen nach einem der Ansprüche 1 bis 11, wobei die Verriegelungsmittel mindestens ein Ritzel umfassen, das mit einer Zahnstange kämmt.

13. Elektrisches Gerät zur Zubereitung von Speisen nach Anspruch 12, wobei der Drehgriff (21) und/oder die Zahnstange am Umfang des Deckels (20) angeordnet sind.

14. Elektrisches Gerät zur Zubereitung von Speisen nach einem der Ansprüche 1 bis 13, wobei die Verriegelungsmittel mindestens eine Pleuelstange und/oder ein verformbares Parallelogramm umfassen.

15. Elektrisches Gerät zur Zubereitung von Speisen nach Anspruch 6 oder nach einem der Ansprüche 8 bis 14 in deren Rückbeziehung auf Anspruch 6, wobei die Verriegelungsmittel mindestens einen Schlitten (212) umfassen, der dazu ausgelegt ist, durch den Drehgriff (21) bewegt zu werden, und mit dem Verriegelungsring verbunden ist.

16. Elektrisches Gerät zur Zubereitung von Speisen nach Anspruch 15, wobei die Verriegelungsmittel eine Gleitführung zwischen dem Schlitten (212) und dem Ring umfassen, die beispielsweise durch einen Mitnehmerstift (213) gebildet ist, der an dem Schlitten (212) oder dem Verriegelungsring angeordnet ist, sowie durch einen Schlitz, der in dem jeweils anderen Teil von Schlitten (212) und Verriegelungsring ausgebildet ist.

17. Elektrisches Gerät zur Zubereitung von Speisen nach einem der Ansprüche 15 bis 16, wobei der Schlitten (212) gleitend am Deckel (20) geführt ist.

18. Elektrisches Gerät zur Zubereitung von Speisen nach einem der Ansprüche 1 bis 17, umfassend einen abnehmbaren Innendeckel, der dazu ausgelegt ist, Dichtungsmittel zu bilden, um die Druckgarart zu ermöglichen.

19. Elektrisches Gerät zur Zubereitung von Speisen nach einem der Ansprüche 1 bis 18, wobei die Verriegelungsmittel Haltemittel umfassen, die dazu ausgelegt sind, den Deckel (20) gegen das Gehäuse (10) zu halten.

20. Elektrisches Gerät zur Zubereitung von Speisen nach Anspruch 19, wobei die Haltemittel zwischen einer Haltestellung, in der der Deckel (20) gegen das Gehäuse (10) gehalten wird, und einer Zugangsstellung beweglich sind, in der der Deckel (20) frei zwischen der Schließstellung und der Öffnungsstellung bewegt werden kann,
wobei die Bedieneinrichtung zu einer dritten Bedienstellung beweglich ist, in der sich die Haltemittel in der Zugangsstellung befinden,
und wobei die zweite Bedienstellung zwischen der dritten Bedienstellung und der ersten Bedienstellung angeordnet ist.

21. Elektrisches Gerät zur Zubereitung von Speisen nach einem der Ansprüche 19 bis 20, wobei die Verriegelungsmittel Verstellmittel umfassen, um eine Bewegung der Haltemittel zu erzwingen.

22. Elektrisches Gerät zur Zubereitung von Speisen nach einem der Ansprüche 19 bis 21, wobei die Haltemittel durch mindestens einen Riegel (23) gebildet sind.

## Claims

1. Electrical food preparation appliance arranged to perform a plurality of cooking modes including at least one pressure-cooking mode and to perform at least one hot-air cooking mode, comprising at least:
a housing (10) with a support portion arranged to rest on a work surface and defining a base plane,
a receptacle formed in the housing (10),
a bowl defining a working space intended to receive food for carrying out the food preparation and arranged to be received in the receptacle of the housing (10),
a lid (20), movable between a closed position in which access to the working space is prevented and an open position in which access to the working space is permitted,
lid locking means (20), movable between an unlocked position in which the lid (20) can be freely moved between the closed position and the open position, and a locked position in which the lid (20) is locked in the closed position so as to enable said at least one pressure-cooking mode,
a control interface movable between a first control position in which the locking means are in their locked position and a second control position in which the locking means are in their unlocked position,
the control interface comprising a rotary handle (21) about a handle axis contained in a plane substantially parallel to the base plane.

2. Electrical food preparation appliance according to claim 1, arranged to allow the hot-air cooking mode independently of the position of the locking means.

3. Electrical food preparation appliance according to any one of claims 1 to 2, wherein the lid (20) comprises cooking means including heating means and/or cooking ventilation means (22).

4. Electrical food preparation appliance according to any one of claims 1 to 3, wherein the control interface is arranged on the lid (20).

5. Electrical food preparation appliance according to any one of claims 1 to 4, wherein the locking means form a bayonet locking system.

6. Electrical food preparation appliance according to any one of claims 1 to 5, wherein the locking means comprise a locking ring.

7. Electrical food preparation appliance according to any one of claims 1 to 4, wherein the locking means comprise retractable jaws.

8. Electrical food preparation appliance according to any one of claims 1 to 7, wherein the lid (20) comprises the locking means.

9. Electrical food preparation appliance according to any one of claims 1 to 8, wherein the rotary handle (21) is movable between:
a folded-down position against the lid (20), and
a raised position relative to the lid (20).

10. Electrical food preparation appliance according to claim 9, wherein the folded-down position of the rotary handle (21) is arranged to define the locked position of the locking means and wherein the raised position of the rotary handle (21) is arranged to define the unlocked position of the locking means.

11. Electrical food preparation appliance according to any one of claims 1 to 10, wherein the locking means comprise a conversion mechanism arranged to convert a rotational movement of the rotary handle (21) into a translational movement, and preferably to convert the translational movement into a second rotational movement of the locking means.

12. Electrical food preparation appliance according to any one of claims 1 to 11, wherein the locking means comprise at least one pinion meshing with a rack.

13. Electrical food preparation appliance according to claim 12, wherein the rotary handle (21) and/or the rack are arranged at the periphery of the lid (20).

14. Electrical food preparation appliance according to any one of claims 1 to 13, wherein the locking means comprise at least one connecting rod and/or a deformable parallelogram.

15. Electrical food preparation appliance according to claim 6 or according to any one of claims 8 to 14 when dependent on claim 6, wherein the locking means comprise at least one carriage (212) arranged to be moved by the rotary handle (21) and connected to the locking ring.

16. Electrical food preparation appliance according to claim 15, wherein the locking means comprise a sliding connection between the carriage (212) and the ring, formed for example by a driving index (213) carried by one of the carriage (212) and the locking ring, and a slot formed in the other of the carriage (212) and the locking ring.

17. Electrical food preparation appliance according to any one of claims 15 to 16, wherein the carriage (212) is arranged in a sliding connection on the lid (20).

18. Electrical food preparation appliance according to any one of claims 1 to 17, comprising a removable inner lid arranged to form sealing means enabling the pressure-cooking mode.

19. Electrical food preparation appliance according to any one of claims 1 to 18, wherein the locking means comprise retaining means arranged to retain the lid (20) against the housing (10).

20. Electrical food preparation appliance according to claim 19, wherein the retaining means are movable between a retaining position in which the lid (20) is retained against the housing (10), and an access position in which the lid (20) can be freely moved between the closed position and the open position,
wherein the control interface is movable to a third control position in which the retaining means are in the access position,
and wherein the second control position is arranged between the third control position and the first control position.

21. Electrical food preparation appliance according to any one of claims 19 to 20, wherein the locking means comprise displacement means for forcing displacement of the retaining means.

22. Electrical food preparation appliance according to any one of claims 19 to 21, wherein the retaining means are formed by at least one latch (23).
